## Europäisches Patentamt
## European Patent Office
## Office européen des brevets

(19)

(11) Numéro de publication : **0 013 245**
**B1**

(12) # FASCICULE DE BREVET EUROPÉEN

(45) Date de publication du fascicule du brevet :
**13.10.82**

(21) Numéro de dépôt : **79401071.0**

(22) Date de dépôt : **27.12.79**

(51) Int. Cl.³ : **F 21 M 7/00**, F 21 M 3/20,
B 60 Q 1/06

(54) Perfectionnements aux projecteurs de véhicules automobiles.

(30) Priorité : **27.12.78 FR 7836449**

(43) Date de publication de la demande :
**09.07.80 (Bulletin 80/14)**

(45) Mention de la délivrance du brevet :
**13.10.82 Bulletin 82/41**

(84) Etats contractants désignés :
**BE CH DE GB IT NL SE**

(56) Documents cités :
**DE C 864 837**
**FR A 838 989**
**FR A 893 349**
**FR A 1 142 805**
**FR A 2 201 429**
**US A 2 910 576**

(73) Titulaire : **CIBIE PROJECTEURS**
**17, rue Henri Gautier**
**F-93012 Bobigny (FR)**

(72) Inventeur : **Deverrewaere, Alain**
**4, rue Marguerite**
**F-94210 La Varenne (FR)**

(74) Mandataire : **Martin, Jean-Jacques**
**Cabinet REGIMBEAU 26, Avenue Kléber**
**F-75116 Paris (FR)**

Imprimerie Jouve, 18, rue St-Denis, 75001 Paris, France

Perfectionnements aux projecteurs de véhicules automobiles

La présente invention concerne les projecteurs pour véhicules automobiles.

Plus précisément, elle concerne les projecteurs du type comportant un réflecteur muni d'une lampe, une pièce intercalaire ou entretoise montée sur l'ouverture du réflecteur, et une glace de fermeture montée sur la pièce intercalaire.

De tels projecteurs sont connus depuis assez longtemps. Le rôle des pièces intercalaires y est triple :

— elles servent de cuvelage ou enveloppe protectrice du projecteur ;

— elles permettent d'augmenter la profondeur axiale du projecteur, et de régler la distance du réflecteur à la glace ;

— elles permettent de disposer les glaces obliquement par rapport à l'axe optique du projecteur, de telle sorte que la glace peut suivre la courbure fuyante d'une carrosserie automobile.

Dans les constructions connues jusqu'à présent, on a utilisé des pièces intercalaires métalliques ou en matière plastique moulée.

Les réflecteurs ont été le plus souvent réalisés en métal embouti, le projecteur étant dans tous les cas réalisé par assemblage d'un réflecteur et d'une pièce entretoise.

D'autre part, les projecteurs doivent être orientables en hauteur et leur position peut être réglée soit manuellement, soit automatiquement. Dans les projecteurs du type précité, on a déjà proposé à cet effet de permettre le déplacement du réflecteur et de la pièce intercalaire à l'aide de moyens de pivotement, un joint d'étanchéité étant disposé entre la pièce intercalaire et le réflecteur ; un tel ensemble est décrit au brevet français FR-A-838 989.

Le brevet allemand DE-C-864 837 décrit une structure de projecteur comprenant un réflecteur et une glace frontale séparés par une pièce intercalaire, la pièce intercalaire et le réflecteur étant associés par des moyens de pivotement permettant leur déplacement relatif, des moyens d'étanchéité assurant la fermeture étanche du projecteur entre réflecteur et pièce intercalaire, la pièce intercalaire étant munie de moyens de fixation à la carrosserie et le réflecteur étant muni de moyens susceptibles de coopérer avec une pièce de réglage pour le faire pivoter autour des moyens de pivotement.

La présente invention concerne une structure de ce dernier type, caractérisé essentiellement en ce que le réflecteur, la pièce intercalaire, les moyens de pivotement, les moyens de fixation de la pièce intercalaire à la carrosserie et les moyens susceptibles de coopérer avec la pièce de réglage, sont réalisés en un seul ensemble, par moulage d'une matière plastique, et en ce que les moyens de pivotement comportent au moins un palier solidaire du réflecteur et au moins un palier solidaire de la pièce intercalaire, tourillonnant autour d'un même axe.

Les moyens formant charnière sont constitués par des organes homologues venus de moulage avec le réflecteur et la pièce entretoise, sous forme d'un empilement de paliers respectivement solidaires du réflecteur et de la pièce entretoise, et articulés autour d'un même axe central. Avantageusement dans ce cas, cet axe formant charnière est placé à proximité de la partie frontale avant de la pièce entretoise.

Comme on l'a déjà indiqué, le réflecteur et la pièce entretoise sont montés de façon étanche l'un par rapport à l'autre. Cette étanchéité peut être assurée par des membranes, soufflets ou liaisons souples déformables analogues, venus de moulage avec le réflecteur et avec l'entretoise.

Enfin, pour assurer une fixation réglable du projecteur selon l'invention sur la carrosserie d'un véhicule automobile, la pièce entretoise et le réflecteur sont munis chacun d'au moins une pièce de fixation et/ou d'une pièce susceptible de coopérer avec une pièce de réglage.

D'autres caractéristiques et avantages de l'invention apparaîtront à la lecture de la description qui va suivre en se référant aux dessins annexés, donnés à titre d'exemples non limitatifs et sur lesquels :

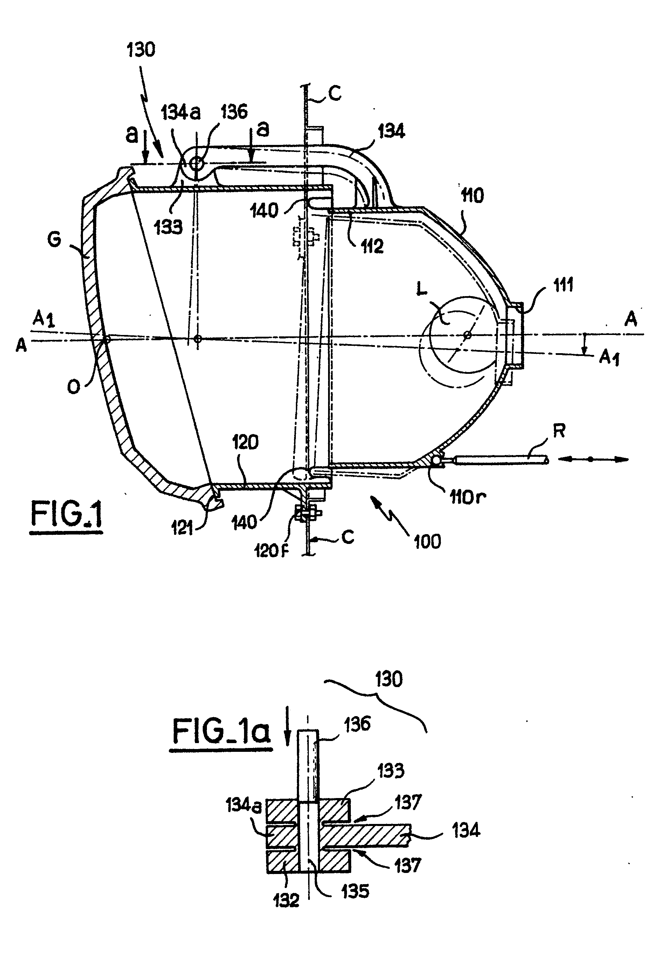

la figure 1 représente en coupe verticale axiale un projecteur selon l'invention ;

la figure 1a est une vue schématique de détail, selon la ligne de coupe a-a de la fig. 1, montrant la réalisation des moyens de pivotement formant charnière.

Le projecteur de la fig. 1, d'axe optique A-A comporte un ensemble unitaire articulé 100, comportant un réflecteur 110 et une pièce entretoise 120 réunis par des moyens de pivotement formant charnière, 130, permettant l'oscillation relative du réflecteur 110 et de la pièce entretoise 120 autour d'un axe horizontal, ainsi que des moyens d'étanchéité 140 raccordant de façon étanche le bord avant du réflecteur 110 au bord arrière de l'entretoise 120 sans gêner pour autant la possibilité de déplacement relatif.

Dans l'exemple représenté, à la fig. 1, le réflecteur 110, la pièce entretoise 120 et les moyens de pivotement 130 sont réalisés en une matière plastique et sont venus de moulage en une seule opération. De même, les moyens d'étanchéité 140 sont constitués, comme représenté sur la fig. 1, par un mince voile de matière plastique venu de moulage avec les deux pièces 110 et 120, et formant soufflet déformable étanche.

D'une manière connue en elle-même, la pièce entretoise 120 comporte à sa partie avant un rebord périphérique 121 susceptible de recevoir une glace G. De même, le réflecteur 110 porte-t-il à sa partie arrière une ouverture de montage 111 destinée à recevoir une lampe L.

Pour le montage sur la carrosserie C d'un véhicule automobile, ainsi que pour son réglage, le projecteur de la fig. 1 comporte les éléments suivants : l'entretoise 120 comporte une bride de fixation 120f et le réflecteur 110 comporte une pièce d'appui 110r susceptible d'être associée à une pièce de réglage R, par exemple une vis susceptible d'être vissée dans la carrosserie. Dans l'exemple représenté à la fig. 1, la pièce R comporte une tête renflée sphérique engagée à force dans un évidement de la pièce 110r.

On comprend facilement que le projecteur est fermement fixé à la carrosserie par la bride 120f, dans une position de réglage moyen. Lorsque l'on veut modifier l'orientation en hauteur du faisceau issu du projecteur, on agit sur la pièce R qui fait osciller le réflecteur 110 autour de la charnière 130. On remarquera à ce propos que la pièce de réglage R peut être soit une vis de réglage mécanique, soit toute autre pièce susceptible d'être déplacée en translation pour le réglage et notamment une pièce constituant l'extrémité d'un système de réglage hydraulique.

Ainsi, l'ensemble monobloc selon l'invention permet-il, de façon particulièrement simple, la fixation et le réglage du projecteur. La fabrication en une seule opération de moulage des pièces 110 et 120, des moyens de pivotement 130 ainsi que des moyens d'étanchéité 140 évite de nombreuses opérations d'assemblage. Les moyens d'étanchéité 140 complètent nécessairement la structure. On a représenté sur la fig. 1 de tels moyens d'étanchéité comme un soufflet à simple pli. Il est clair qu'il ne s'agit que d'un exemple et que l'on peut employer des systèmes à plusieurs plis ou plusieurs ondulations ou bien aussi des membranes.

La figure 1a illustre la réalisation des moyens de pivotement formant charnière, 130, qui sont obtenus de la façon suivante : l'entretoise 120 est munie de deux oreilles formant paliers 132 et 133. De même, le réflecteur 110 est muni d'un bras 134 partant de la partie avant 112 du réflecteur et dont l'extrémité 134a formant palier vient s'engager entre les deux oreilles. Les paliers 132 et 133, et le palier 134a, sont traversés d'un trou central 135. Toutes ces pièces sont venues de moulage avec le réflecteur 110 et l'entretoise 120. Dans la position de moulage, les parties homologues des oreilles et du bras sont en une seule pièce.

Le montage de l'articulation (fig. 1a) se fait de la manière suivante : on introduit l'axe d'articulation 136 dans l'orifice 135 et on sépare les oreilles 132 et 133 du bras 134 soit par une opération de sciage le long des fentes 137, soit par une prérotation à force pour casser la faible épaisseur de matière à l'emplacement des fentes 137. Après séparation des oreilles et du bras, l'articulation est réalisée autour de l'axe 136.

Avec une telle articulation, le soufflet 140 réunissant le réflecteur 110 et l'entretoise 120 s'étend bien entendu uniformément tout autour des pièces.

Un tel système d'articulation présente l'avantage, comme on le voit sur la fig. 1, de rapprocher sensiblement de la glace G du réflecteur 110 et de la pièce entretoise le point relatif de pivotement : au cours du réglage, qui se fait comme précédemment indiqué, l'axe optique du système passe de la position A-A à la position A1-A1, et les deux axes A-A et A1-A1 intersectent pratiquement tous deux la glace G au même point central O. Autrement dit, le rôle de la glace, sur le plan optique, reste-t-il sensiblement le même quelle que soit l'orientation du faisceau lumineux renvoyé par le réflecteur 110, ce qui est le but recherché.

Les exemples donnés ci-dessus ne font qu'illustrer les différentes possibilités de mise en œuvre de l'invention, qui sont nombreuses. Bien entendu, dans tous les modes de réalisation, on peut soit réaliser la fixation du projecteur par son entretoise, et le réglage par le réflecteur (comme à la fig. 1), soit assurer à la fois la fixation et le réglage sur l'entretoise et sur le réflecteur.

La solution de l'invention est substantiellement différente des solutions traditionnelles où les pièces sont réalisées séparément et assemblées. La réalisation monobloc selon l'invention est évidemment très avantageuse sur le plan économique ; même si l'on sait réaliser certains feux d'éclairage automobile dans des matières plastiques, il importe de souligner que le domaine des feux et le domaine des projecteurs sont bien distincts, et qu'il n'est certainement pas évident de réaliser, dans le domaine des projecteurs un ensemble monobloc pièce intercalaire — moyens de pivotement — réflecteur — pièces annexes.

L'apport inventif est d'autant plus clair que la structure de base est très ancienne et que les techniques de moulage utilisées sont encore plus anciennes. Il semble que lorsque l'on en est venu à fabriquer des réflecteurs en matière plastique, on ait conservé l'habitude de les fabriquer, comme les réflecteurs métalliques qu'ils remplaçaient, de façon séparée, indépendamment des autres constituants du projecteur. C'est en particulier ce préjugé qui a été vaincu avec la présente invention.

**Revendications**

1. Projecteur de véhicule automobile, du type comprenant un réflecteur (110) et une glace frontale (G) séparés par une pièce intercalaire (120), la pièce intercalaire et le réflecteur étant associés par des moyens de pivotement (130) permettant leur déplacement relatif, des moyens d'étanchéité (140) assurant la fermeture étanche du projecteur entre réflecteur et pièce intercalaire (120), la pièce intercalaire étant munie de moyens de fixation (120f) à la carrosserie et le réflecteur étant muni de moyens (110r) susceptibles de coopérer avec une pièce de réglage pour le faire pivoter autour des moyens de pivotement, caractérisé en ce que le réflecteur (110), la pièce intercalaire (120), les moyens de pivotement (130), les moyens de fixation (120f) de la pièce intercalaire à la carrosserie et les moyens (110r) susceptibles de coopérer avec la pièce de réglage, sont réalisés en un seul ensemble, par moulage d'une matière plastique, et en ce que les moyens de pivotement comportent au moins un palier (134a) solidaire du réflecteur et au moins un palier (132, 133) solidaire de la pièce intercalaire, tourillonnant autour d'un même axe (136).

2. Projecteur selon la revendication 1, caractérisé en ce que l'axe de tourillonnement (136) est proche de la partie avant de la pièce intercalaire (120) et de la glace (G), de telle sorte que l'axe optique (AA) du réflecteur (110) intersecte toujours sensiblement la même zone de la glace (G).

3. Projecteur selon l'une des revendications 1 et 2, caractérisé en ce que les moyens d'étanchéité (140) sont constitués par un voile de matière plastique (140) venu de moulage avec le réflecteur (110) et la pièce intercalaire (120), et formé en soufflet, membrane ou structure déformable analogue.

## Claims

1. Motor vehicle headlamp, of the type comprising a reflector (110) and a front glass (G) separated by an interposed member (120), the interposed member and the reflector being connected by pivoting means (130) allowing their relative movement, sealing means (140) ensuring the watertight closure of the headlamp between the reflector and interposed member (120), the interposed member being provided with means (120f) for fixing it to the bodywork and the reflector being provided with means (110r) able to cooperate with an adjusting member for causing it to pivot about pivoting means, characterised in that the reflector (110), the interposed member (120), the pivoting means (130), the means (120f) for fixing the interposed member to the bodywork and the means (110r) able to cooperate with the adjusting member are made in a single unit, by moulding plastics material and in that the pivoting means comprise at least one bearing (134a) integral with the reflector and at least one bearing (132, 133) integral with the intermediate member, pivoting about the same axis (136).

2. Headlamp according to claim 1, characterised in that the pivot axis (136) is close to the front part of the interposed member (120) and the glass (G), so that the optical axis (AA) of the reflector (110) always substantially intersects the same area of the glass (G).

3. Headlamp according to one of claims 1 and 2, characterised in that the sealing means (140) are constituted by a disc of plastics material (140) cast in one piece with the reflector (110) and the interposed member (120) and formed as bellows, a membrane or similar deformable structure.

## Ansprüche

1. Scheinwerfer für ein Kraftfahrzeug, mit einem Reflektor (110) und einer vorderen Abdeckscheibe (G), die vom Reflektor durch ein Zwischenstück (120) getrennt ist, welches mit dem Reflektor durch eine Schwenkvorrichtung (130) verbunden ist, die eine Relativverstellung zwischen dem Reflektor und dem Zwischenstück ermöglicht, und mit einer Dichtung (140) zum dichten Verschließen des Scheinwerfers zwischen dem Reflektor und dem Zwischenstück, wobei das Zwischenstück mit Mitteln (120f) zum Befestigen an der Karosserie und der Reflektor mit Mitteln (110r) zum Zusammenwirken mit einem Einstellglied versehen sind, mit denen er sich in der Schwenkvorrichtung schwenken läßt, dadurch gekennzeichnet, daß der Reflektor (110), das Zwischenstück (120), die Schwenkvorrichtung (130), die Mittel (120f) zum Befestigen des Zwischenstückes an der Karosserie und die Mittel (110r) zum Zusammenwirken mit dem Einstellglied durch Formen aus einem Kunststoff als eine einzige Baugruppe hergestellt sind und daß die Schwenkvorrichtung wenigstens ein mit dem Reflektor fest verbundenes Lager (134a) und wenigstens ein mit dem Zwischenstück fest verbundenes Lager (132, 133) umfaßt, die um ein und dieselbe Achse (136) schwenkbar sind.

2. Scheinwerfer nach Anspruch 1, dadurch gekennzeichnet, daß die Schwenkachse (136) nahe dem vorderen Abschnitt des Zwischenstückes (120) und der Abdeckscheibe (G) so angeordnet ist, daß die optische Achse (AA) des Reflektors (110) stets ungefähr denselben Bereich der Abdeckscheibe (G) schneidet.

3. Scheinwerfer nach Anspruch 1 oder 2, dadurch gekennzeichnet, daß die Dichtung (140) von einem an den Reflektor (110) und das Zwischenstück (120) angeformten Saum (140) aus Kunststoff gebildet und in Form eines Balges, einer Membrane oder eines ähnlichen verformbaren Teils ausgebildet ist.

FIG.1

FIG.1a